# EUROPEAN PATENT SPECIFICATION

(11) **EP 4 245 561 B1**
(45) Date of publication and mention of the grant of the patent: **24.04.2024**
(21) Application number: 22161904.2
(22) Date of filing: 14.03.2022
(51) Int. Cl.: B44C 1/24, B32B 37/06, B32B 37/10, B32B 37/16, B44C 3/00, B44C 3/02, B44C 3/08, D21F 11/00, B27N 3/00, B29C 53/04, B29C 53/84, B27N 3/04, B27N 3/18, B27N 5/00, B29C 70/12, B29C 70/54, B31F 1/00, B31F 5/04

(54) **METHOD FOR MANUFACTURING A COMPOSITE ARTICLE**
VERFAHREN ZUR HERSTELLUNG EINES VERBUNDARTIKELS
PROCÉDÉ DE FABRICATION D'UN ARTICLE COMPOSITE

(43) Date of publication of application: 20.09.2023
(73) Proprietor: PaperShell AB, 543 50 Tibro (SE)
(72) Inventor: BREITHOLTZ, Anders, 426 71 Västra Frölunda (SE); GUSTAFSSON APLEHAG, Mathieu, 126 39 HÄGERSTEN (SE)
(74) Representative: AWA Sweden AB

(56) References cited:
- DE-A1-102006 014 049
- US-A- 4 616 991
- US-A1- 2008 197 536
- US-A1- 2017 266 839

## Description

### Technical field

The present invention relates to a method for manufacturing a composite article.

### Background

In view of the growing awareness of the negative environmental impacts of global warming and pollution of sea and soil, it is a necessity to replace pure fossil-based plastics, mineral filled plastics and fiber reinforced plastics (FRP), such as glass fiber reinforced plastics (GFRP) and carbon reinforced plastics (CFRP), with more environmentally friendly alternatives. FRP composites such as GFRP and or CFRP composites, exhibit a high or very high strength-to-weight ratio, and is extremely rigid due to the pronounced length and strength of the manmade non-degradable fibers. These FRP composites are often used in various applications where e.g. flexural strength, impact resistance and/or weather resistance is of importance, like in vehicles, in protective sport appliances, buildings, electric housing and the like. However, the environmental impact of these materials is high in both manufacturing of raw materials like glass or carbon fiber, production of an intermediate of the same, and disposal and/or recycling. Attempts have been made to replace fossil-based polymers in GFRP and CFRP materials with more environmentally friendly alternatives, e.g. bio based or bio attributed polymers. Further, attempts have been made to replace the glass or carbon fiber with natural fibers such as flax, hemp, sisal etc. However, the major challenge for both bio based and/or bio attributed, and renewable and/or natural fiber alternatives for GFRP and CFRP composites is the lack of sufficient volumes and consistency of quality in supply that can compete with the fossil based polymers and manmade fibers.

DE102006014049A1 discloses a method for producing a structured plastic component, comprising providing a structuring layer between a first support element and a first pressure element and arch structuring of the structuring layer by subjecting it to pressure to form convex structures. The structuring layer contains a reinforcing material, such as cellulose fibers, glass fibers, textile fibers and/or carbon fibers, and a crosslinkable binder.

Therefore, there exists a need for improved methods for manufacturing environmentally friendly and complex-shaped articles.

### Summary

An object of the present invention is to provide a method for manufacturing a composite article which at least partly alleviates the above-mentioned drawbacks. This, and other objects, that will become apparent in the following are accomplished by a method for manufacturing a composite article as defined in claim 1.

The inventive method has proven highly promising for manufacturing a plurality of composite articles having simple or complex structures such as sport appliances, such as helmets and skateboards; furniture items, such as chairs and tables; and vehicle parts, such as dashboards, door handles and interior parts.

According to one aspect , not according to the claimed invention, there is a provided a composite article obtainable by the inventive method.

### Brief description of the drawings

The above objects, as well as additional objects, features, and advantages of the present invention defined in the appended claims, will be more fully appreciated by reference to the following illustrative and non-limiting detailed description of embodiments of the present invention, when taken in conjunction with the accompanying drawings, wherein:
Fig. 1a-d depict, in cross-section, a schematic illustration of a stack of sheets comprising one or more recesses according to embodiments of the invention.
Fig. 2a-b depict, in cross-section, a schematic illustration of a sheet comprising one or more recesses according to embodiments of the invention.
Fig. 3a-c depict, in cross-section, schematic illustrations of sheets having recesses of different shapes according to embodiments of the present invention.
Fig. 4a-c depict a top view of schematic illustrations of sheet or stacks of sheets with one or more recess which have been perforated according to embodiments of the present invention.
Fig. 5a-b depict a simulation of where cracks or ruptures are predicted to occur, and the real experimental outcome.
Fig. 6a-b depict another simulation of where deformations and wrinkling behaviour are predicted to occur in a composite article lacking perforations/recesses, and the real experimental outcome thereof.

The figures are not necessarily to scale, and generally only show parts that are necessary in order to elucidate the inventive concept, wherein other parts may be omitted or merely suggested.

### Detailed description

The present disclosure relates to new and enhanced methods for producing a composite article using a perforating step and a pressing tool for pressing said article into a desired shape.

There is an aim to replace fossil-based polymers in GFRP and CFRP materials with more environmentally friendly alternatives, e.g. bio based or bio attributed polymers, and to replace the glass or carbon fiber with natural fibers.

Natural fiber composites (NFC) are divided into non-wood fiber based composites and, wood fibers and wood particles based composites. Wood fibers are often shorter in length than other natural fibers like jute or flax. Due to the greater length of the non-wood fibers (natural fibers) e.g. the potential in flexural strength driven applications is greater than with the wood fibers and/or wood particles. Also, non-wood fibers have often high (>50%) cellulose content, which delivers a high tensile strength, and degree of cellulose crystallinity, whereas natural fibers have some disadvantages because the high cellulose content implies a large amount hydroxyl groups (OH) in the fiber that can attract water molecules, thus causing swelling of the fiber and initiating natural retting process. This results in voids at the interface of the composite, which will affect the mechanical properties and loss in dimensional stability.

A large and stable renewable resource of wood fibers is cellulosic fibers of different wood species, such as conifer or eucalyptus, coming from forest industries, such as pulp and paper production. Recently, a number of NFC materials have been produced combining cellulosic fibers from wood and polymers to decrease the environmental impacts and yet create load-bearing articles. Such materials are usually manufactured by mixing and compounding into granulates with compounders extruder, obtaining granulates for injection molding.

A well-known solution of creating single curved, or developable, composite articles based on cellulosic fibers is wood veneer that comprises layers, wherein the long wood fibers in each layer are often placed perpendicularly to the wood fibers in the adjacent layers, and wherein the layers are heat-pressed in a single curved shape, such as a seat for a chair. For more complex composite articles, such as composite articles comprising double curved or non-developable, surfaces, special and expensive 3D veneer or plastics is currently the only option, since the veneer will tear and break at attempts to create a double-curved surface.

Accordingly, the present disclosure provides improved methods for manufacturing environmentally friendly and complex-shaped composite articles by using a perforating step and a pressing tool to shape the composite article.

The method includes the steps of providing at least one sheet comprising a composite material, wherein the composite material comprises cellulosic fibers and a composite agent in form of polyfurfuryl alcohol, perforating the at least one sheet to form one or more recesses in the at least one sheet, pressing the at least one sheet in a pressing tool such that bending of the at least one sheet occurs at the location of the one or more recesses, to form the composite article.

Perforating the at least one sheet allows for a more bendable at least one sheet. Thus, the at least one sheet may more easily adapt to the shape of the pressing tool. Thus, composite articles having more complex shapes may be more easily and effectively manufactured. Complex shapes may, e.g., refer to shapes comprising bends having a small radius, acute, right or obtuse angles, or sharp edges, while having a homogenous distribution of the ingoing materials. The recesses are preferably provided along a distance of the at least one sheet where bending is desired, i.e. to more efficiently adapt to the pressing tool.

The inventors have surprisingly found that perforating the at least one sheet to form one or more recesses in the at least one sheet prior to pressing the composite article advantageously allows for the manufacture of a composite article which does not become too thick or deviate undesirably much from the desired shape.

Perforating the at least one sheet to form one or more recesses in the at least one sheet advantageously decreases the risk of subjecting the at least one sheet to undesirably high local pressures during the pressing process. Undesirably high local pressures may induce discoloration of the composite article. Said discoloration commonly occurs when manufacturing a composite article without priorly perforating the at least one sheet.

Each of the one or more recesses may have the same or different shape. It is understood that some of the one or more recesses may have the same shape while some others of the one or more recesses may have another shape. Each of the one or more recesses may extend substantially the same distance or different distances into the sheets.

At least one of the one or more recesses may have a depth in the range of X-100 %, such as Y-100 %, such as Z-100 % based on the thickness of the at least one sheet. As an alternative, at least one of the one or more recesses may have a depth in the range of X-90 %, such as Y-80% based on the thickness of the at least one sheet.

At least one of the one or more recesses may have a breadth in the range of x-100 %, such as y-100 %, such as z-100 % based on the breadth of the sheet. As an alternative, the at least one of the one or more recesses may have a breadth in the range of from x-95 %, such as y-90%, such as z-85 % based on the breadth of the sheet.

It is understood that in an example where the one or more recesses are e.g. tapered, have a V-shape or a U-shape, the depth and/or the breadth of the one or more recesses may vary depending on in what plane of the at least one sheet the depth and/or breadth is measured. In this example, a normal of the plane is parallel to a normal of the surface of the at least one sheet.

Perforating the at least one sheet to form one or more recesses in the at least one sheet may be understood as a step of removing material from the at least one sheet. In some embodiments, the removed material is arranged in the pressing tool together with the at least one sheet prior to pressing. The removed material may thus be part of the produced composite article which advantageously decreases the amount of waste material of the method. Thus, an even more environmentally friendly and cost-effective manufacturing method is obtained. The inventors have surprisingly found that a composite article manufactured from at least one sheet and waste material exhibits substantially analogous material properties as a composite article manufactured using no waste material.

The inventors have surprisingly realised that the present method induces floating of the composite material, in particular floating of the cellulosic fibers of the composite material, thereby creating a composite article having an even distribution of the composite material. Expressed differently, the inventive method provides a homogenous distribution of the cellulosic fibers throughout the composite material. Cracks and tears which may appear during the manufacturing process are advantageously filled with the composite material as a result of the induced floating. This advantageously allows for the production of a composite article having substantially equal material properties throughout the article. This advantageously decreases the risk of local imperfections in the composite article and thus decreasing the risk of local portions having undesirable mechanical properties such as being prone to crack formation.

The inventive method allows for the recesses being filled with the composite material during the pressing process thus producing a composite article comprising substantially no traces of said perforations.

The floating induced by the present inventive method further advantageously induces joining or merging of the at least one sheet to sheet itself or another sheet which advantageously allows for improved mechanical properties. Expressed differently, substantially no traces of the interface between the at least one sheet to itself or another sheet may be visible in the produced composite article. Thus, the risk of adhesive or cohesive failure, which may occur when adhering sheets to each other using e.g. glue, is decreased or avoided.

The composite agent contributes to internal mechanical cross-linking of the fibers to each other, such that the fibers are caught and locked in each other, thus improving and contributing to the tensile and/or flexural strength of the manufactured composite article

The present method further induces hardening or annealing of the composite material thus providing a composite article having improved material properties, e.g. stiffness and hardness, as compared to the provided at least one sheet.

Pressing the at least one sheet according to the present disclosure manufactures a composite article which is substantially dry. This advantageously leads to the composite article being relatively easy to remove from the pressing tool. This improves the quality of the produced composite article since the risk of the composite article being adhered to the pressing tool is decreased. A composite article being partially or completely adhered to the pressing tool after production could necessitate a costly and difficult removal procedure and/or to the composite article breaking when removed from the pressing tool. Further, the method decreases the need for cleaning the pressing tool between the runs since substantially the whole composite article may be removed from the pressing tool. Consequently, the inventive method allows for faster repetitions, i.e. manufacturing a plurality of composite articles in sequence.

The term "composite article" as referred to herein in, should generally be understood as an article comprising at least to two substances with different physical and chemical properties and in which each substance retains its identity while contributing desirable properties to the whole.

The composite articles produced by the inventive method have high moisture resistance, which is highly beneficial when the composite articles are intended for outdoor use, or for use in a moist environment, such as a bathroom or in a humid climate. Further, the finishing of the surface of composite articles manufactured by the present invention is highly decorative and aesthetically appealing and may further be adjusted to the desired application. In particular, the surface of the composite articles may be shiny, dull, or comprise a desired pattern. Further, the surface of the manufactured composite article has proven wear-resistant. Thus, costly and/or non-eco-friendly post-processing steps to improve wear-resistance, such as lacquering or coating, may be avoided.

Thermoset resins may be substituted and non-substituted furan, epoxy, polyurethane, or phenolic resin. The reactive thermoplastic resins may have similar performance after curing as thermosets and may be in liquid or powder form. Such composite agents are readily available, cost-efficient, oftentimes biodegradable, and environmentally friendly. According to the invention, the composite agent is polyfurfuryl alcohol (PFA). Among bio-based polymers polylactic acid, the poly L-lactide, polyhydroxybuturate, polyhydroxyalkalonates (PHAs), polyamide, polypropylene (PP) and polyethylene terephthalate can be used.

The perforating the at least one sheet to form one or more recesses in the at least one sheet may be performed using, e.g., laser cutting or mechanical cutting.

The one or more recesses may for example be arranged sequentially in a row, in a circular pattern, or substantially any other pattern.

In some embodiments, wherein the at least one sheet comprises at least two sheets, further comprising a step of
- arranging the at least two sheets as a stack of sheets.
The term "stack of sheets" as referred to herein, may generally be understood as a layered unit wherein the at least to sheets have been arranged on top of each other. The stack of sheets advantageously allows for tailoring the thickness of the manufactured composite article by i.e. providing stacks of different thicknesses or providing stacks comprising different amounts of sheets.

In some embodiments, at least two recesses are formed in the at least one sheet or stack of sheets, and wherein said recesses are located on opposite sides of the sheet or stack. The stack may comprise 2, 3 or more sheets, such as 4-45 sheets, such as 15-30 sheets.

This advantageously improves the formability of the at least one sheet or stack of sheets. Thus the at least one sheet or stack of sheets may be more easily manipulated to the desired shape during the pressing step while e.g. decreasing the risk of crack formation.

In some embodiments, at least one of the one or more recesses extends through all of the sheets in the stack.

One recess extending through all of the sheets in the stack may be understood as the recess constituting a through hole in a first sheet of the stack and constituting a blind-hole in a second sheet of the stack. In this example the through hole and the blind-hole are connected.

In some embodiments, the recess is a blind-hole or a through hole.

The recess being a blind hole or through hole improves the bendability and processing of the at least one sheet.

The term "blind hole" as referred to herein, may generally be understood as a hole having a specific depth without breaking through to another side of the e.g. sheet. Expressed differently, a blind hole may provide e.g. a sheet with only one opening.

The term "through hole" as referred to herein, may generally be understood as a hole running completely through e.g. a sheet. Expressed differently, a through hole may provide e.g. a sheet with two separate, connected openings.

In some embodiments, each of the separate recesses are aligned in a direction perpendicular to the extension of the sheet.

The term "extension of the sheet" as referred to herein, may generally be understood as a direction in which the sheet extends, e.g., a direction from one short-end to another.

In one example, the sheet is a substantially rectangular wherein the extension of the sheet may be considered a direction from one short-end to another.

Each of the separate recesses may have substantially the same shape, such as the substantially same diameter or breadth, or different shapes. Each of the separate recesses may have the same depth or different depths.

In some embodiments, each sheet in the stack comprises a separate recess.

Each sheet in the stack comprising a separate recess allows for improved bendability of the stack and thus aids in manufacturing composite articles having a certain curvature.

Each of the separate recesses may have the same or different shape. It is understood that some of the separate recesses may have the same shape while some others of the separate recesses may have another shape. Each of the separate recesses may extend substantially the same distance or different distances into the sheets.

In some embodiments, the recess is V-shaped, U-shaped or rectangular. The specific recess shapes allow for improved bendability of the at least one sheet or the stack of sheets.

In some embodiments, pressing the at least one sheet in a pressing tool comprises pressing said at least one sheet in a pressing tool at a pressure of at least 20 kg/cm² and the temperature of at least 120°C during a time period of at least one minute. The pressing may be conducted at a pressure of at least 25 kg/cm², such as at least 30 kg/cm². The temperature may be at least 140 °C, such as at least 160 °C. The time period may be at least two minutes, such as at least three minutes. The specified pressure, temperature and time have been found to provide a composite article of a particularly desired quality.

It is understood that the composite material is subjected to the pressure of at least 25 kg/cm², such as at least 30 kg/cm².

The temperature of the inventive method may be controlled by heating the pressing tool. The pressing tool may be heated by e.g. flowing hot water in conduits provided in the pressing tool, electrically heating heat elements provided in the pressing tool, by conductively heating at least part of the pressing tool, or by placing the pressing tool in an oven. It is understood that the pressing tool conducts heat so as to provide an even heat distribution to the composite article. The pressing tool may comprise a metal, such as aluminum, e.g. aluminum alloys, or steel.

In some embodiments not according to the claimed invention, the composite agent is selected from the list of cellulose, hemicellulose, nanocellulose, and combinations thereof.

In some embodiments, the at least one sheet is a polyfurfuryl alcohol impregnated kraft paper. The specific at least one sheet provides a composite article having improved material properties, e.g. hydrophobicity and self-extinguishability as determined to ISO 3795. Kraft paper as such is known to the person skilled in the art.

The term "polyfurfuryl alcohol impregnated kraft paper" as referred to herein, may generally be understood as a kraft paper which has been impregnated or infused with a polyfurfuryl alcohol.

In some embodiments, the polyfurfuryl alcohol impregnated kraft paper comprises 60 to 90 wt% of cellulosic fibers having a maximum length of 10 mm, such as a maximum length of 4 mm, and 10 to 40 wt% of a composite agent selected from hemicellulose, nanocellulose, lignin, and polyfurfuryl alcohol, such as polyfurfuryl alcohol.

In some embodiments, the cellulosic fibers have a maximum length of 10 mm, such as maximum 4 mm.

The specified length further improves the floating induced by the inventive method. Without wishing to be bound by any particular theory, the advantageous floating properties may due to the relatively short fibers in combination with the composite agent having a certain viscosity, that can be improved by e.g. adding max. 20% ethanol in the process, and in combination with the specified manufacturing parameters, e.g., pressure, temperature, and pressure, thus causing the fibers to float during manufacturing of the composite article.

Cellulosic fibers are made with ethers or esters of cellulose, which can be obtained from the bark, wood or leaves of plants, or from other plant-based material. Cellulosic fibers may be derived from the conversion of wood into wood pulp. The length of each cellulosic fiber in the composite material may be same as or different from the length of the other cellulosic fibers. Indeed, it is conceivable that some of the cellulosic fibers may have a length being greater than 10 mm, but the amount of these fibers should be considered negligible. By the term "negligible" is understood as an amount below 0.01 wt%. Cellulosic fibers may be provided in any suitable form, such as sheets, pellets or the like. The cellulosic fibers may be randomly oriented or may be oriented such that the longitudinal extensions of the fibers are substantially parallel.

The cellulosic fibers that may be used in the composite material for manufacturing the composite article can be recycled cellulosic fibers, which offers the advantage of decreasing the cost of the composite article even further and contributing to circular economy. On the other hand, the cellulosic fibers may be virgin cellulosic fibers, which provides an increased tensile and/or flexural strength of the composite article compared to when recycled cellulosic fibers are used. Further, it is conceivable that the cellulosic fibers is a mixture of recycled and virgin cellulosic fibers. The cellulosic fibers may comprise softwood kraft paper pulp, hardwood kraft paper pulp, sulfite fibers, organosolv fibers or combinations thereof. Preferably, the cellulosic fibers comprise from 50 to 90 wt% of the kraft paper pulp.

In some embodiments, the sheet has a thickness of up to 2 mm, such as up to 1.5 mm, such as up to 1 mm. The specified thicknesses allow for an easily bendable and formable sheet which advantageously allows for the at least one sheet to adapt to the shape of the pressing tool. It is understood that the shape of the pressing tool corresponds to the shape of the produced composite article. As an alternative, the at least one sheet may have a thickness of from 0.1 mm to 1 mm, such as from 0.2 mm to 1 mm, such as from 0.2 mm to 0.8 mm.

In some embodiments, the method comprises a step of cooling the composite article. The cooling may be active or passive.

Aspects and embodiments of the present disclosure will be described more fully hereinafter with reference to the accompanying drawings.

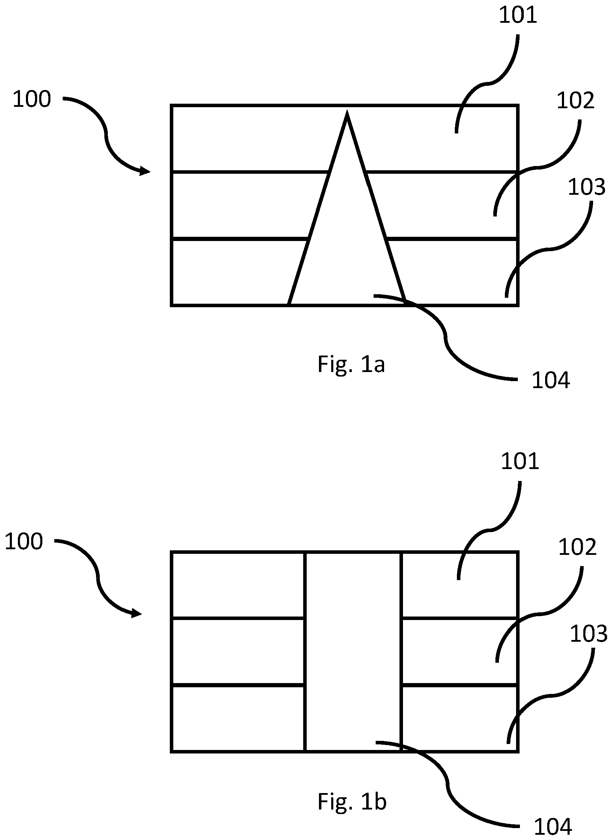

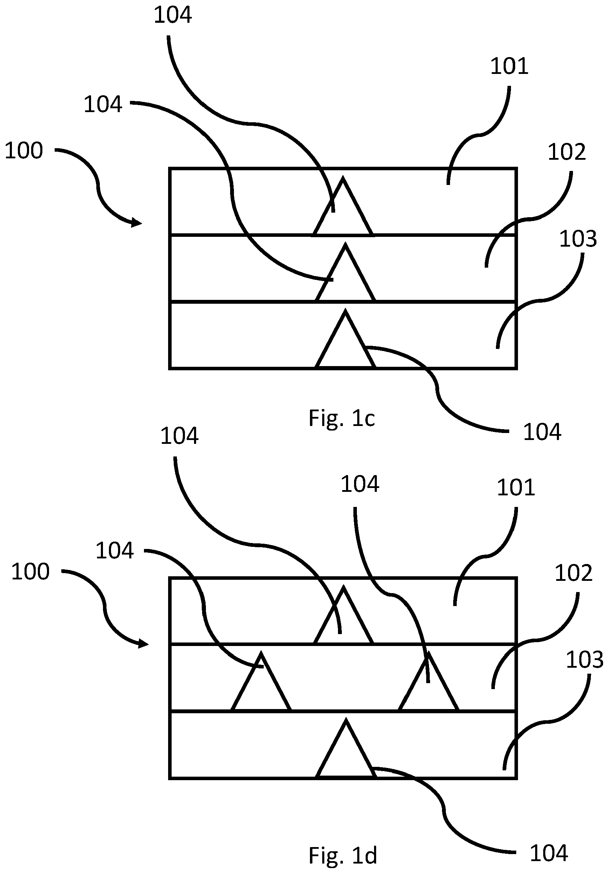

Figure 1a depicts in cross-section a stack of sheets 100 which have been perforated. In the present example the stack of sheets 100 comprises three sheets 101, 102, 103 wherein a recess 104 extends into all of the sheets in the stack of sheets 100. Here, the recess 104 extends through two sheets 102, 103 and partially into a third sheet 101. The recess 104 may thus be considered a blind hole.

Figure 1b depicts in cross-section a stack of sheets 100 which have been perforated. In the present example the stack of sheets 100 comprises three sheets 101, 102, 103 wherein a recess 104 extends through all of the sheets so as to form a through hole.

Figure 1c-d depicts in cross-section a stack of sheets 100 which have been perforated. In the present example the stack of sheets comprises three sheets 101, 102, 103 wherein each sheet in the stack comprises a separate recess 104. As seen in figure 1c, each of the separate recesses 104 may be aligned in a direction perpendicular to the orientation of the sheet.

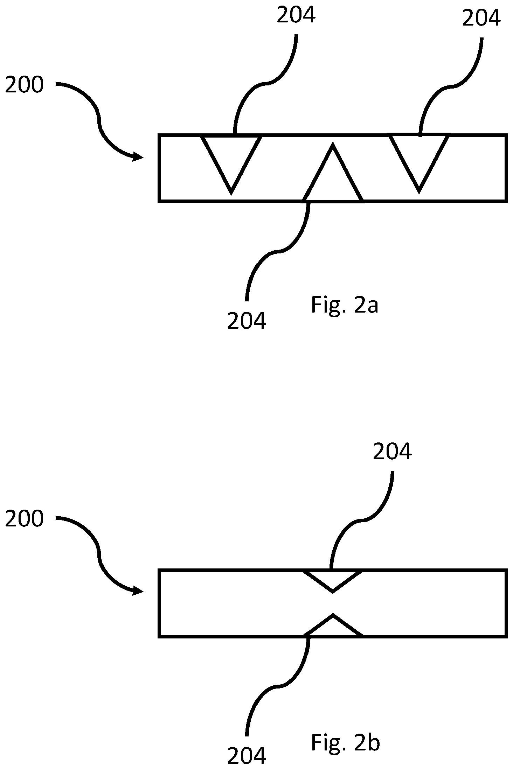

Figure 2a depicts in cross-section a sheet 200 which may be one of at least one sheet and/or may be arranged as one sheet part of a stack of sheets. In the present example, three recesses 204 are located on opposite sides of the sheet 200.

Figure 2b depicts in cross-section a sheet 200 which may be one of at least one sheet and/or may be arranged as one sheet part of a stack of sheets. In the present example, two recesses 204 are located on opposite sides of the sheet 200 and where the recesses 204 are aligned in a direction perpendicular to the orientation of the sheet 200.

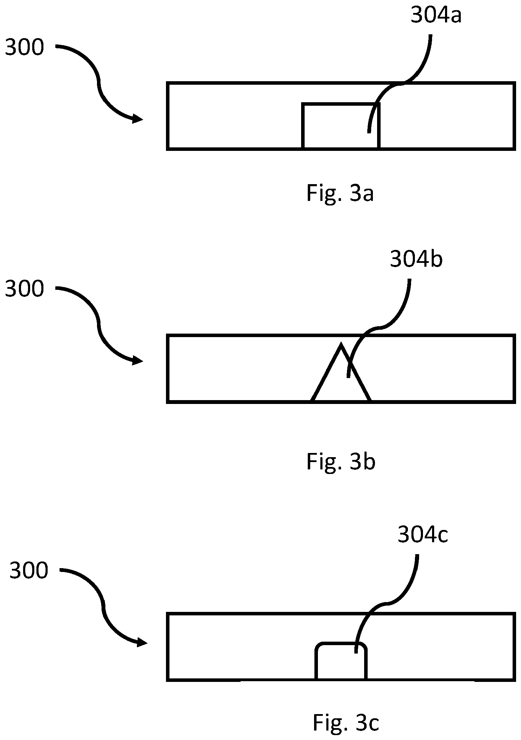

Figure 3a-c depicts sheets which have been perforated such that a recess 304a, 304b, 304c has been formed. In figure 3a, the recess 304a is square-shaped. In figure 3b, the recess 304b is V-shaped. In figure 3c, the recess 304c is U-shaped.

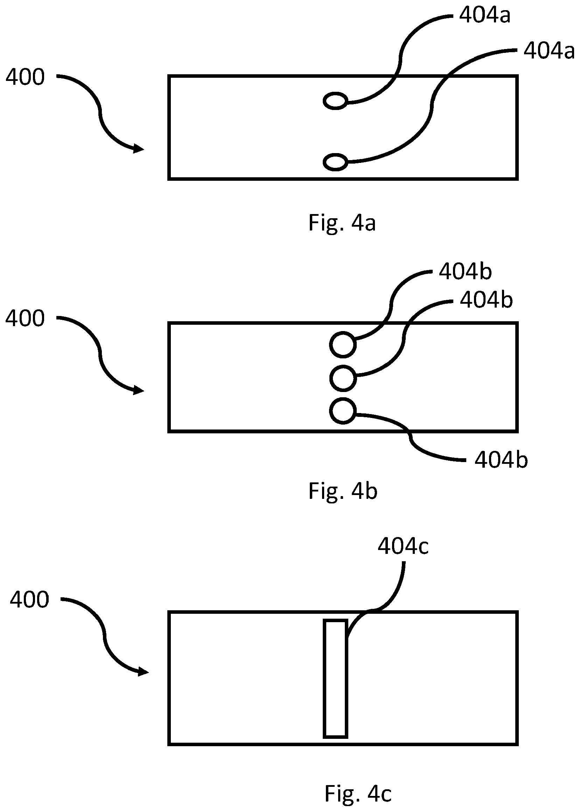

Figure 4a-c schematically shows a top view of sheets 400a, 400b, 400c which have been perforated to form one or more recesses 404a, 404b, 404c in the sheet 400a, 400b, 400c according to embodiments of the invention.

As seen in figure 4a, the one or more recesses 404a may for example be two recesses 404a, each having an oval cross-section.

As seen in figure 4b, the one or more recesses 404b may for example be three recesses, each having a circular cross-section.

As seen in figure 4c, the one or more recesses 494c may for example be one recess having a rectangular cross-section.

Referring to figure 4a-c, one or more of the recesses may be a blind hole or a through hole. The sheets depicted in figure 4a-c may for example be arranged as a stack of sheets wherein, for example, at least one of the one or more recess extend through all of the sheets.

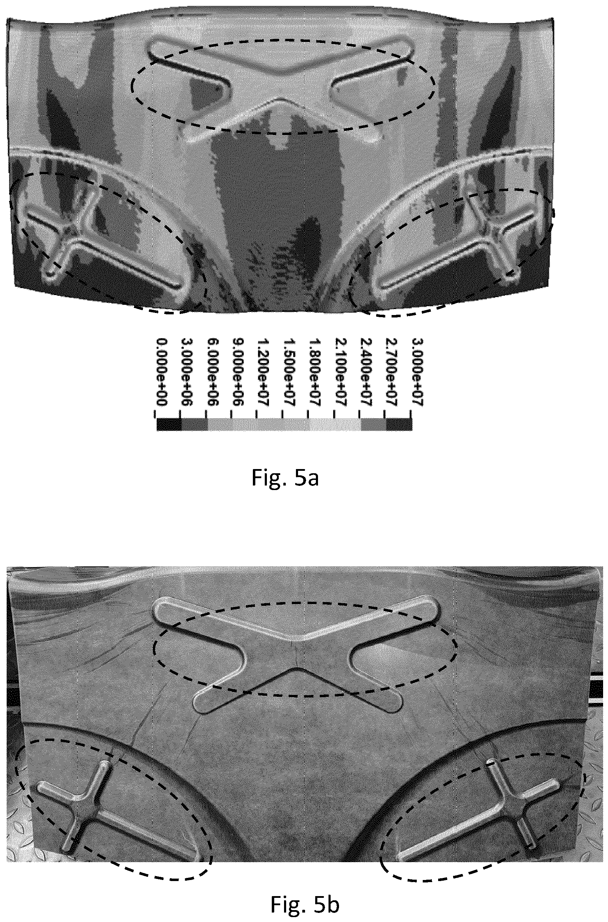

Fig. 5a-b depict a simulation of where cracks or ruptures are predicted to occur in a composite article lacking perforations/recesses, and the real experimental outcome thereof. Fig. 5a depicts the simulation where vonMises Stresses (MPa) are precited (see scale), where areas of high stress are predicted to be prone to breaking or cracking. Fig. 5b shows the actual outcome, which alignes with the prediction in that cracks appear in the predicted regions. Areas of high stress (encircled) corresponds in test to areas with dry spots and failure regions. High stress areas results in "dry-spots" (resin outflow) as well as potential failure.

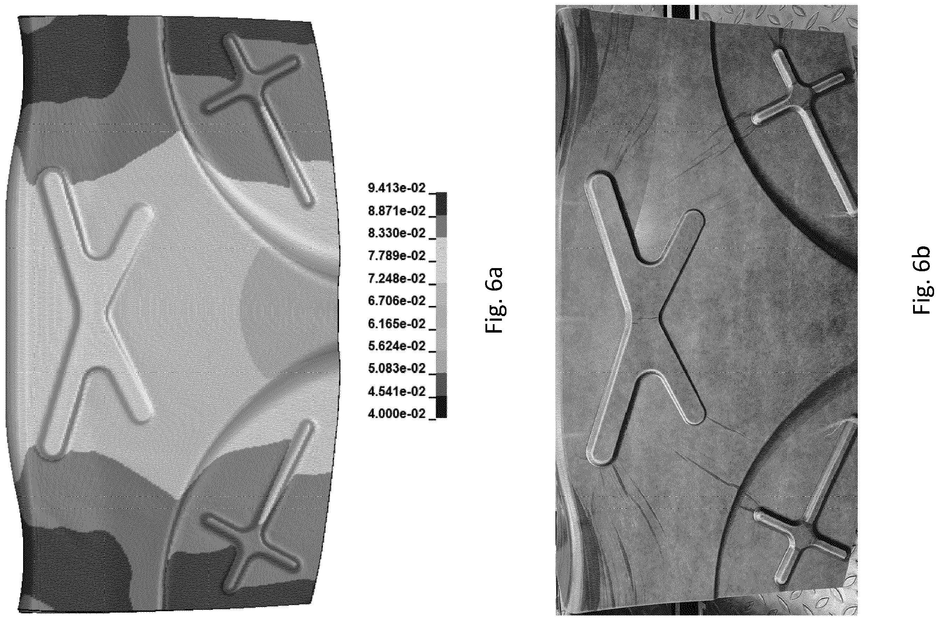

Fig. 6a-b depict another simulation of where deformations and wrinkling behaviour are predicted to occur in a composite article lacking perforations/recesses, and the real experimental outcome thereof. Fig. 6a depicts the simulation where Global displacement (m) is precited (see scale), where areas of high stress are predicted to be prone to deformation. Fig. 6b shows the actual outcome, which alignes with the prediction. Large deformation gradients correspond to direction of flow of "excess" resin. "Wrinkling behaviour forms channels for resin flow".

### Example

A composite article is manufactured according to the following. One rectangular sheet of a polyfurfuryl impregnated kraft paper is perforated using a laser cutter so as to provide recesses in the sheet. In the present example, the recesses are V-shaped and sequentially arranged from a first short side to an opposing second short side of the sheet. The sheet is placed in a pressing tool and pressed to a pressure of 20 kg/cm² and a temperature of 120°C during a time period of one minute so as to produce a composite article. The composite article is removed from the pressing tool.

Additionally, variations to the disclosed embodiments and examples can be understood and effected by the skilled person in practicing the claimed invention which is defined in the appended claims, from a study of the drawings, and the disclosure. In the claims, the word "comprising" does not exclude other elements or steps, and the indefinite article "a" or "an" does not exclude a plurality. The mere fact that certain measures are recited in mutually different dependent claims does not indicate that a combination of these measures cannot be used to advantage.

## Claims

1. A method for manufacturing a composite article comprising of steps of:
- providing at least one sheet comprising a composite material, wherein the composite material comprises cellulosic fibers and a composite agent, wherein the composite agent is polyfurfuryl alcohol;
- perforating the at least one sheet to form one or more recesses in the at least one sheet;
- pressing the at least one sheet in a pressing tool such that bending of the at least one sheet occurs at the location of the one or more recesses, to form the composite article.

2. The method according to claim 1, wherein the at least one sheet comprises at least two sheets, further comprising a step of
- arranging the at least two sheets as a stack of sheets.

3. The method according to claim 1 or 2, wherein at least two recesses are formed in the at least one sheet or stack of sheets, and wherein said recesses are located on opposite sides of the sheet or stack.

4. The method according to claim 2 or 3, wherein at least one of the one or more recesses extends into all of the sheets in the stack.

5. The method according to claim 4, wherein the recess is a blind-hole or a through hole.

6. The method according to claim 4, wherein each of the separate recesses are aligned in a direction perpendicular to the extension of the sheet.

7. The method according to claim 2, wherein each sheet in the stack comprises a separate recess.

8. The method according to any one of the preceding claims, wherein the recess is V-shaped, U-shaped or rectangular.

9. The method according to any one of the preceding claims, wherein pressing the at least one sheet in a pressing tool comprises pressing said at least one sheet in a pressing tool at a pressure of at least 20 kg/cm² and the temperature of at least 120°C during a time period of at least one minute.

10. The method according any one of the preceding claims, wherein the at least one sheet is a polyfurfuryl alcohol impregnated kraft paper.

11. The method according to any one of the preceding claims, wherein the cellulosic fibers have a maximum length of 10 mm.

12. The method according to any one of the preceding claims, wherein the sheet has a thickness of up to 2 mm.

## Patentansprüche

1. Verfahren zum Herstellen eines Verbundartikels, umfassend folgende Schritte:
- Bereitstellen von mindestens einer Lage, die ein Verbundmaterial umfasst, wobei das Verbundmaterial cellulosische Fasern und ein Verbindungsmittel umfasst, wobei das Verbindungsmittel Polyfurfurylalkohol ist;
- Perforieren der mindestens einen Lage, um eine oder mehrere Aussparungen in der mindestens einen Lage auszubilden;
- Pressen der mindestens einen Lage in einem Presswerkzeug, derart, dass an dem Ort der einen oder mehreren Aussparungen Biegen der mindestens einen Lage erfolgt, um den Verbundartikel auszubilden.

2. Verfahren nach Anspruch 1, wobei die mindestens eine Lage mindestens zwei Lagen umfasst, ferner umfassend einen Schritt des:
- Anordnens der mindestens zwei Lagen als Stapel aus Lagen.

3. Verfahren nach Anspruch 1 oder 2, wobei mindestens zwei Aussparungen in der mindestens einen Lage oder dem Stapel aus Lagen ausgebildet werden, und wobei die Aussparungen an entgegengesetzten Seiten der Lage oder des Stapels angeordnet sind.

4. Verfahren nach Anspruch 2 oder 3, wobei sich mindestens eine der einen oder mehreren Aussparungen in alle Lagen in dem Stapel hineinerstreckt.

5. Verfahren nach Anspruch 4, wobei die Aussparung ein Sackloch oder ein Durchgangsloch ist.

6. Verfahren nach Anspruch 4, wobei alle einzelnen Aussparungen in einer im rechten Winkel zu der Erstreckung der Lage verlaufenden Richtung ausgerichtet sind.

7. Verfahren nach Anspruch 2, wobei jede Lage in dem Stapel eine eigene Aussparung umfasst.

8. Verfahren nach einem beliebigen der vorhergehenden Ansprüche, wobei die Aussparung V-förmig, U-förmig oder rechteckig ist.

9. Verfahren nach einem beliebigen der vorhergehenden Ansprüche, wobei Pressen der mindestens einen Lage in einem Presswerkzeug Pressen der mindestens einen Lage in einem Presswerkzeug mit einem Druck von mindestens 20 kg/cm² und der Temperatur von mindestens 120 °C über einen Zeitraum von mindestens einer Minute umfasst.

10. Verfahren nach einem beliebigen der vorhergehenden Ansprüche, wobei die mindestens eine Lage ein mit Polyfurfurylalkohol imprägniertes Kraftpapier ist.

11. Verfahren nach einem beliebigen der vorhergehenden Ansprüche, wobei die cellulosischen Fasern eine maximale Länge von 10 mm aufweisen.

12. Verfahren nach einem beliebigen der vorhergehenden Ansprüche, wobei die Lage eine Dicke von bis zu 2 mm aufweist.

## Revendications

1. Procédé de fabrication d'un article composite comprenant les étapes suivantes :
- prévision d'au moins une feuille comprenant un matériau composite, le matériau composite comprenant des fibres cellulosiques et un agent composite, l'agent composite étant de l'alcool polyfurfurfurylique ;
- perforation de l'au moins une feuille pour former un ou plusieurs retraits dans l'au moins une feuille ;
- compression de l'au moins une feuille dans un outil de compression de manière à ce que la flexion de l'au moins une feuille ait lieu à l'endroit du ou des plusieurs retraits afin de former l'article composite.

2. Procédé selon la revendication 1, dans lequel l'au moins une feuille comprend au moins deux feuilles, comprenant en outre une étape de
- disposition des au moins deux feuilles sous forme d'une pile de feuilles.

3. Procédé selon la revendication 1 ou 2, dans lequel les au moins deux retraits sont formés dans l'au moins une feuille ou pile de feuilles, et lesdits retraits se trouvent sur des faces opposées de la feuille ou de la pile.

4. Procédé selon la revendication 2 ou 3, dans lequel au moins un du ou des plusieurs retraits s'étend dans toutes les feuilles de la pile.

5. Procédé selon la revendication 4, dans lequel le retrait est un trou borgne ou un trou traversant.

6. Procédé selon la revendication 4, dans lequel chacun des retraits séparés est aligné dans un sens perpendiculaire à l'extension de la feuille.

7. Procédé selon la revendication 2, dans lequel chaque feuille de la pile comprend un retrait séparé.

8. Procédé selon l'une quelconque des revendications précédentes, dans lequel le retrait est en forme de V, en forme de U ou rectangulaire.

9. Procédé selon l'une quelconque des revendications précédentes, dans lequel la compression de l'au moins une feuille dans un outil de compression comprend la compression de ladite au moins une feuille dans un outil de compression à une pression d'au moins 20 kg/cm² et à la température d'au moins 120 °C pendant une période d'au moins une minute.

10. Procédé selon l'une quelconque des revendications précédentes, dans lequel l'au moins une feuille est un papier kraft imprégné d'alcool polyfurfurfurylique

11. Procédé selon l'une quelconque des revendications précédentes, dans lequel les fibres cellulosiques ont une longueur maximale de 10 mm.

12. Procédé selon l'une quelconque des revendications précédentes, dans lequel la feuille a une épaisseur de jusqu'à 2 mm.
